# NEUE EUROPÄISCHE PATENTSCHRIFT

(11) **EP 2 217 666 B2**
(45) Veröffentlichungstag und Bekanntmachung des Hinweises auf die Entscheidung über den Einspruch: **12.07.2017**
(45) Hinweis auf die Patenterteilung: 15.01.2014
(21) Anmeldenummer: 08855887.9
(22) Anmeldetag: 12.11.2008
(51) Int. Cl.: C09C 3/06, C09C 1/30, C09C 1/00, C09C 1/40, C09C 1/02

(54) **SICHERHEITSPIGMENT**
SECURITY PIGMENT
PIGMENT DE SÉCURITÉ

(30) Priorität: 04.12.2007 DE 102007058601
(43) Veröffentlichungstag der Anmeldung: 18.08.2010
(73) Patentinhaber: Merck Patent GmbH, 64293 Darmstadt (DE)
(72) Erfinder: PETRY, Ralf, 64347 Griesheim (DE); WEIDEN, Michael, 64285 Darmstadt (DE); KLEIN, Sylke, 64380 Rossdorf (DE); ULLMANN, Klaus-Christian, 64625 Bensheim (DE)
(86) Internationale Anmeldenummer: PCT/EP2008/009533
(87) Internationale Veröffentlichungsnummer: WO 2009/071167

(56) Entgegenhaltungen:
- EP-A1- 1 028 146
- WO-A1-93/08237
- WO-A1-2006/047621
- WO-A1-2006/119651
- WO-A1-2007/019418
- WO-A2-2005/017048
- WO-A2-2007/081410
- WO-A2-2007/134192
- DE-A1-102004 032 799
- DE-A1-102004 055 291
- US-A- 3 500 047
- US-A- 4 767 205
- US-A1- 2003 168 635
- US-A1- 2006 180 792
- US-A1- 2006 252 088

## Beschreibung

Die vorliegende Erfindung betrifft die Verwendung eines Sicherheitspigmentes mit einem intrinsischen verdeckten und/oder forensischen Sicherheitsmerkmal, welches zur Pigmentierung von Farben, Lacken, Pulverlacken, Druckfarben, Beschichtungszusammensetzungen, Kunststoffen, Klebstoffen, Papierrohmassen, Baumaterialien, Gummimassen, Explosivstoffen oder dergleichen verwendet werden kann und dort vorzugsweise zur Identifizierung bzw. Verifizierung der Echtheit dieser Produkte dient. Besondere Vorteile weist das Sicherheitspigment demzufolge auch bei der Pigmentierung von Sicherheitsdokumenten und Sicherheitserzeugnissen auf.

Der Schutz von Produkten aller Art gegen Nachahmungen und Fälschungen gewinnt zunehmend an Bedeutung. Insbesondere hochwertige Markenprodukte werden oft nachgeahmt und in täuschend echt wirkenden Verpackungen zum Kauf angeboten. Es häufen sich auch die Fälle, dass Pharmazeutika oder Ersatzteile von Fahrzeugen den Angriffen von Fälschern ausgesetzt werden, so dass nicht nur ein materieller Schaden für die Hersteller der Originalprodukte entsteht, sondern auch gegebenenfalls erhebliche gesundheitliche Beeinträchtigungen oder Gefährdungen für die Verbraucher zu befürchten sind.

Es werden daher große Anstrengungen von der Industrie unternommen, um die Hersteller von Markenprodukten aller Art vor Imageverlust und Schadenersatzforderungen und Kunden oder Patienten vor unabsehbaren Wirkungen von Erzeugnissen zu schützen. Dabei steht außer Frage, dass Produkte, die wegen der Art ihrer Nutzung ohnehin besonderen Sicherheitsvorkehrungen unterliegen, nämlich Sicherheitsdokumente oder Sicherheitsprodukte wie Banknoten, Schecks, Bank- und Kreditkarten, Scheckkarten, Wertpapiere, Urkunden, Ausweise und dergleichen, in Bezug auf den Nachweis ihrer Echtheit besonders vielfältig und fälschungs- sicher ausgestattet sein müssen.

Die Sicherheitsmerkmale in den oben genannten Produkten werden in das Produkt integriert, wenn es dessen Beschaffenheit zulässt, oder werden am Produkt oder dessen Verpackung unmittelbar angebracht.

Bei Sicherheitsmerkmalen wird in der Regel zwischen offenen und verdeckten Sicherheitsmerkmalen unterschieden. In der Regel wird eine Kombination aus beiden angewandt.

Offene Sicherheitsmerkmale sollen dem ungeübten Betrachter leicht zugänglich sein, so dass er die Echtheit des Produktes anhand bestimmter sichtbarer bekannter Anzeichen leicht selbst überprüfen kann. Offene Sicherheitsmerkmale sind daher solche, die ohne oder mit nur geringen Hilfsmitteln erkennbar sind. Häufig werden hierzu farbige Sicherheitselemente, insbesondere solche mit Kipp-Farbeffekt, die ihre Farbe abhängig vom Beleuchtungs- und/oder Betrachtungswinkel ändern, Hologramme, Kinegramme, Wasserzeichen, Sicherheitsfäden oder ähnliches eingesetzt. Solche Sicherheitselemente dienen der Basisidentifikation durch den Endkunden, den Zoll oder informierte Experten und sind leicht zu identifizieren (Identifizierungslevel 1).

Für die qualifizierte Identifikation von Sicherheitselementen werden verdeckte Sicherheitsmerkmale (Level 2) eingesetzt, die ohne Hilfsmittel nicht sichtbar sind und nur dem qualifizierten Betrachter, wie beispielsweise zertifizierten Händlern oder Inspektoren, dem Zoll oder anderen Behörden zur Kenntnis gebracht werden. Solche Sicherheitselemente sind nur nach Anweisung auffindbar und bestehen beispielsweise aus Zusatzstoffen, die an bestimmten Stellen der Produkte unter bestimmten Bedingungen UV- oder IR-Aktivität entfalten oder aus gezielt eingesetzten flüssigkristallinen Materialien oder Taggants, von denen letztere beispielsweise über eine bestimmte Reihenfolge ihres Schichtaufbaus identifizierbar, nur in geringster Konzentration vorhanden und nur mit bestimmten Hilfsmitteln (Vergrößerungsgeräten) sichtbar sind.

Den höchsten Identifizierungslevel (Level 3) weisen forensische Merkmale auf, die der Produktverfolgung durch den Markeninhaber dienen und außer dem Markeninhaber, gerichtlichen Behörden und Spezialisten niemandem zur Kenntnis gebracht werden. Solche Sicherheitsmerkmale sind nur unter bestimmten technischen und informativen Voraussetzungen auffindbar und sollen vor allem zum Beweis der Produktechtheit oder - fälschung vor Gericht, zur Produktverfolgung über Vertriebsketten, zur Entdeckung schwarzer Schafe in der Produktions- oder Vertriebskette, zur Aufdeckung von Produktabzweigung, Parallelhandel und illegalen Reimporten o. ä. dienen. Beispiele hierfür sind DNA-Taggants, Smart-Label RFID-Transponder oder dergleichen.

Taggants sind Partikel im Mikromaßstab, die einem Produkt meist in sehr geringen Mengen zugesetzt werden, um unter bestimmten Bedingungen wieder auffindbar zu sein und damit der Produktidentifizierung bzw. dem Echtheitsnachweis der Produkte zu dienen. Sie weisen spezifische Partikeleigenschaften auf, die ihre Auffindbarkeit oder Zuordnung erleichtern. Oft handelt es sich dabei um mehrschichtige Partikel, die über die Farbe und/oder die Reihenfolge der Schichten codierbar sind und dadurch bestimmten Produkten, Produktchargen oder Herstellern zugeordnet werden können.

Auch die chemischen oder physikalischen Eigenschaften solcher Partikel können die Basis für ihre Wiederauffindbarkeit bilden.

Taggants werden den jeweiligen Produkten in der Regel nur in solchen Mengen zugesetzt, dass sie unter vorbestimmten Bedingungen gerade noch identifizierbar sind, ohne entsprechende Hilfsmittel aber nicht wahrgenommen werden können. Letzteres setzt voraus, dass ihre Eigenschaften so gestaltet sind, dass sie das Erscheinungsbild des Gesamtproduktes nicht in einem solchen Maße beeinflussen, dass es sich bereits optisch von vergleichbaren Produkten ohne Zusatz dieser Taggants unterscheiden lässt.

Der Einsatz von Effektpigmenten als Taggants ist bereits beschrieben worden. So wird beispielsweise in der WO 2005/055236 ein Verfahren zur Echtheitsprüfung von mit Taggants versetzten Polymeren beschrieben, bei dem als Taggants beispielsweise plättchenförmige Metallpigmente eingesetzt werden, die auf ihrer Oberfläche einen gedruckten mikroskopisch kleinen Code aufweisen oder spezielle Partikel, die abhängig vom Betrachtungswinkel eine Farbänderung zeigen.

In Polymeren, die ansonsten gegebenenfalls mit organischen löslichen Farbstoffen eingefärbt sind, sind solche Partikel für den geübten Betrachter relativ gut auffindbar. Für den Fall dass die Polymere jedoch ohnehin mit Effektpigmenten massegefärbt sind, die eine ähnliche Materialzusammensetzung wie die Taggants aufweisen und da sie zur Farbgebung verwendet werden, in größeren Mengen eingesetzt werden, ist das Auffinden der Taggants und damit die Echtheitsprüfung des Produktes selbst für den geübten Begutachter nur unter großen Schwierigkeiten möglich.

US 4,243,734 offenbart den Einsatz von Polymerplättchen oder von aus Metallfolien gestanzten oder geschnittenen Plättchen gleicher Form und Größe, die auf ihrer Oberfläche dem Hersteller oder Eigentümer zuordenbare Zeichen tragen, als Taggants. Die Herstellung solcher Taggants ist jedoch sehr teuer, da eine Vielzahl von Werkzeugen nötig ist, um die verschiedenen Zeichen individuell auf den Partikeln aufbringen zu können. Die Anzahl der Variationsmöglichkeiten wird dadurch sehr limitiert und die zu identifizierenden Produkte stark verteuert. Auch ist eine schnelle Anpassung an gewünschte Änderungen bei der äußeren Form und dem Material der Taggants noch mit zusätzlichem Aufwand verbunden.

Auch in der US 6,643,001 sind Plättchen mit bestimmter Form und Größe beschrieben, die über ein auf ihrer Oberfläche aufgebrachtes Muster codierbar sind und zur Identifizierung von Produkten eingesetzt werden können. Die Plättchen können auch zusätzlich mit fluoreszierenden Schichten belegt sein. Sie bestehen weitestgehend aus flüssigkristallinen cholesterischen Materialien, die ihnen ein mit dem Blickwinkel farbilch veränderliches Aussehen (Kipp-Effekt bzw Farbflop) verleihen. Solche flüssigkristallinen Materialien sind jedoch nur sehr schwer in die gewünschten gleichmäßigen Partikelformen überführbar, da polymerisierte Schichten des flüssigkristallinen Materials in geeigneter Weise zerteilt werden müssen. Auch das Codieren auf der Oberfläche der Plättchen ist nur mit einer Spezialbehandlung möglich, die die optischen Eigenschaften der polymeren flüssigkristallinen Materialien nicht zerstört.

Aus der EP 978 373 sind Pigmente bekannt, die durch Zerkleinerung von anorganischen Schichtpaketen, die mindestens zwei übereinander liegende Schichten mit unterschiedlichen chemischen und/oder physikalischen Eigenschaften aufweisen, gewonnen werden. Diese Pigmente weisen auf ihrer Oberfläche ein oder mehrere Symbole auf und können als Taggants eingesetzt werden. Diese Pigmente sollen vorzugsweise einen Farbflop bei Betrachtung unter verschiedenen Winkeln und deutlich mehr als zwei Schichten aufweisen. Die Symbole sollen über einen Laser auf der Oberfläche der Pigmente aufgebracht werden.

Der Schichtaufbau solcher Pigmente ist sehr kompliziert und das Aufbringen von mikroskopisch kleinen Symbolen per Laser sehr schwierig, da der Laser eine sehr feine Linienstruktur erzeugen muss, damit jedes Pigment zumindest einen identifzierbaren Teil des Symbols aufweist. Außerdem ist ein Farbflop an vereinzelt in einem Produkt vorliegenden Pigmenten nur als verschiedene Farbgebung der Einzelpartikel wahrnehmbar, abhängig davon, wie die Pigmente im Produkt ausgerichtet sind. Beim Abkippen des Produktes zu einem anderen Betrachtungswinkel wird dagegen für den Einzelpartikel kein Farbflop sichtbar. Daher ist eine Identifizierung der Partikel praktisch nur über die auf der Oberfläche befindlichen Symbole oder Symbolteile möglich.

In der WO 2005/017048 sind Plättchen für verdeckte Sicherheitsanwendungen beschrieben, die aus einer einzelnen anorganischen dielektrischen Schicht bestehen und eine ausgewählte Form besitzen und/oder auf ihrer Oberfläche ein Muster oder Symbol aufweisen. Vorzugsweise bestehen diese Plättchen aus Zinksulfid. Wird dieses Material entsprechend behandelt, kann es auch fluoreszieren. Die äußere Form der Plättchen lässt sich jedoch in zusätzlich anderweitig pigmentierten Medien nur sehr schwer von der äußeren Form der in weitaus größerer Menge vorliegenden anderen Pigmente unterscheiden, so dass als wesentliches Unterscheidungskriterium wiederum nur die Symbole auf der Oberfläche der Plättchen oder ggf. das fluoreszierende Verhalten der Plättchen dienen können.

Die vorab in den Dokumenten des Standes der Technik beschriebenen Taggants nutzen als gemeinsame Kriterien zu ihrer Identifizierung im wesentlichen entweder die äußere Form der Teilchen und/oder die auf der Oberfläche befindlichen Muster. Weisen die Partikel zusätzlich lumineszierende Eigenschaften auf, betreffen diese durch den Einsatz der Materialien jeweils die gesamte Partikeloberfläche. Als Identifizierungsmerkmal dient in diesen Fällen das Vorhandensein oder Nichtvorhandensein der Lumineszenz. Solche Unterscheidungsmerkmale sind verdeckte Merkmale, die dem Identifizierungslevel 2 angehören. Taggants des Identifizierungslevels 3, die neben verdeckten Merkmalen auch forensische Merkmale enthalten, sind in den zitierten Dokumenten nicht beschrieben worden.

Aus der WO 93/08237 sind plättchenförmige Pigmente mit hohem Glanz und hohem Deckvermögen oder hoher Transparenz bekannt, die aus einer transparenten, anorganischen, plättchenförmigen Matrix, die einen zusätzlichen Bestandteil, welcher ein lösliches oder nichtlösliches Farbmittel ist, enthalten kann und zur Erzielung des Glanzes zumindest auf einer Seite mit einer oder mehreren dünnen, transparenten oder semitransparenten reflektierenden Schichten aus Metalloxiden oder Metallen belegt ist.

In der EP 1 028 146 wird ein farbiges Interferenzpigment beschrieben, welches aus einer plättchenförmigen Schicht als Substrat und einer Beschichtung aus mindestens einer Metalloxidschicht und gegebenenfalls einer weiteren Schicht besteht, wobei mindestens zwei Schichten Farbmittel enthalten oder daraus bestehen.

Die Aufgabe der Erfindung besteht nun darin, die Verwendung von Sicherheitspigmenten aufzuzeigen, die zur Pigmentierung und gleichzeitigen Identifizierung/Echtheitsprüfung von Produkten verschiedenster Art eingesetzt werden können und verdeckte und/oder forensische Sicherheitsmerkmale enthalten, wobei die Sicherheitsmerkmale in den Sicherheitspigmenten wahlweise ohne großen technologischen Aufwand miteinander kombiniert werden können, die Sicherheitspigmente eine gezielte Produktcodierung erlauben und in verschiedenen Abstufungen auf verschiedenen Identifizierungslevels detektiert werden können.

Eine zusätzliche Aufgabe der vorliegenden Erfindung besteht darin, ein Verfahren zum Detektieren des erfindungsgemäßen Sicherheitspigmentes in einem damit pigmentierten Medium oder Produkt zur Verfügung zu stellen.

Die Aufgabe der vorliegenden Erfindung wird durch die Verwendung eines Sicherheitspigmentes mit intrinsischem verdeckten und/oder forensischen Sicherheitsmerkmal, bestehend aus einer transparenten anorganischen Matrix und mindestens einem in die Matrix eingelagerten partikulären Material, welches von der Matrix verschieden ist und unter der Einwirkung von elektromagnetischer Strahlung sichtbares Licht selektiv oder nicht selektiv absorbiert, reflektiert und/oder emittiert, als Taggant gemäß Anspruch 1 gelöst.

Das genannte Sicherheitspigment findet Verwendung zur Pigmentierung von Farben, Lacken, Pulverlacken, Druckfarben, Beschichtungszusammensetzungen, Kunststoffen, Klebstoffen, Papierrohmassen, Baumaterialien, Gummimassen und Explosivstoffen.

Zusätzlich wird die Aufgabe der Erfindung durch ein Verfahren zum Detektieren des genannten Sicherheitspigmentes gemäß Anspruch 22 gelöst, wobei ein das Sicherheitspigment enthaltendes Medium oder ein ein solches Medium enthaltendes Produkt mit elektromagnetischer Strahlung beaufschlagt und unter einer solchen Vergrößerung betrachtet wird, die ausreichend groß ist, um in einem ersten Schritt die äußere Form und Größe des Sicherheitspigmentes und in einem zweiten Schritt die Form, Größe, Anzahl und/oder Farbe des in die Matrix eingelagerten partikulären Materials erkennen zu können.

Das genannte Sicherheitspigment besteht aus einer transparenten anorganischen Matrix und mindestens einem in die Matrix eingelagerten partikulären Material, welches von der Matrix verschieden ist und unter der Einwirkung von elektromagnetischer Strahlung sichtbares Licht selektiv oder nicht selektiv absorbiert, reflektiert und/oder emittiert.

Als transparent im Sinne der vorliegenden Erfindung soll eine anorganische Matrix dann gelten, wenn sie sichtbares Licht im wesentlichen, d.h. zu mindestens 90 %, transmittiert. Als Matrix wird hier eine Stoffzusammensetzung bezeichnet, in die andere Bestandteile eingebettet sind. Als Material für die transparente anorganische Matrix können prinzipiell alle anorganischen Materialien eingesetzt werden, deren Vorstufe während des Herstellungsprozesses des Sicherheitspigmentes zur Aufnahme von partikulären Materialien befähigt ist und die im festen Zustand für sichtbares Licht transparent und chemisch und physikalisch weitestgehend stabil sind.

Dabei kann die transparente Matrix farbig oder farblos sein. Vorzugsweise ist sie farblos.

Die transparente anorganische Matrix besteht vorzugsweise aus Siliziumdioxid, Siliziumoxidhydrat, Aluminiumoxid, Aluminiumoxidhydrat, Magnesiumoxid oder einer Mischung aus zwei oder mehreren dieser Verbindungen (Matrix mit niedriger Brechzahl) oder aus Titandioxid und/oder Titandioxidhydrat (Matrix mit hoher Brechzahl).

Die anorganische Matrix kann auch aus einem Gemisch von Titandioxid und/oder Titandioxidhydrat mit einem oder mehreren der anderen im vorangegangenen Abschnitt genannten Materialien bestehen. In solchen Fällen ist die Zuordnung, ob es sich um eine Matrix mit hoher oder mit niedriger Brechzahl handelt, vom prozentualen Anteil der jeweiligen Materialien abhängig. Ein solches Gemisch stellt jedoch keine besonders bevorzugte Ausführungsform der vorliegenden Erfindung dar.

Als partikuläres Material, welches in die Matrix eingelagert ist, sind alle partikulären Materialien geeignet, die unter dem Einfluss von elektromagnetischer Strahlung mindestens einer Wellenlänge oder eines Wellenlängenbereiches selektiv oder nicht selektiv absorbieren, reflektieren und/oder emittieren.

Das bedeutet, dass das partikuläre Material unter dem Einfluss der Strahlung mindestens eines Teilbereiches des elektromagnetischen (Sonnen)spektrums mindestens eine sichtbare Farbe aufweist.

Dies kann beispielsweise bei Einstrahlung des sichtbaren Wellenlängenbereiches des Sonnenlichtes (λ = 380 - 780 nm) auf das partikuläre Material eine sichtbare reflektierte Farbe sein, die von einer selektiven Absorption des partikulären Materials herrührt, beispielsweise eine rote, blaue oder grüne Reflexionsfarbe bei entsprechend komplementärer Absorption. Partikuläres Material, welches sichtbare Strahlung nicht selektiv absorbiert, weist dagegen in der Regel eine sichtbare im wesentlichen weiße oder schwarze Farbe auf.

Als weiteres partikuläres Material kommen auch Materialien in Frage, welche unter dem Einfluss von elektromagnetischer Strahlung außerhalb des sichtbaren Wellenlängenbereiches des Lichtes eine sichtbare Farbe aufweisen, d.h. solche Materialien, die unter diesen Bedingungen, beispielsweise bei Einstrahlung von Infrarot(IR)- (λ > 780 nm) und/oder Ultraviolet(UV)-Licht (λ < 380), zur Emission von sichtbarem Licht angeregt werden. Solche Materialien werden auch als IR-Upconverter oder UV-Downconverter bezeichnet. Sie lumineszieren unter den genannten Bedingungen im sichtbaren Wellenlängenbereich.

Dieses sichtbare Licht kann wiederum entweder weiß (Anregung zur Emission über ein breites Wellenlängenspektrum) oder farbig (Anregung zur Emission über einen relativ eng begrenzten Wellenlängenbereich) sein.

Das eingesetzte Sicherheitspigment weist im wesentlichen eine Plättchenform auf. Das bedeutet, dass es sich um ein flaches Gebilde handelt, welches auf seiner Ober- und Unterseite zwei annähernd parallel zueinander stehende Oberflächen aufweist, deren Ausdehnung in Länge und Breite die größte Ausdehnung des Pigmentes darstellt. Der Abstand zwischen den genannten Oberflächen, der die Dicke des Plättchens darstellt, weist dagegen eine geringere Ausdehnung auf.

Die Ausdehnung in Länge und Breite des Sicherheitspigmentes beträgt dabei zwischen 1 µm und 250 µm, vorzugsweise zwischen 2 µm und 100 µm, und besonders bevorzugt zwischen 5 µm und 60 µm. Die Dicke beträgt von 0,1 µm bis 12µm, vorzugsweise von 0,1 bis kleiner als 10 µm, besonders bevorzugt von 0,1 µm bis 5 µm und insbesondere bevorzugt von 0,2 - 2 µm.

Das Aspektverhältnis der Plättchen, d.h. das Verhältnis von größter Ausdehnung in Länge bzw. Breite zur Dicke beträgt dabei mindestens 2:1, vorzugsweise jedoch 10:1 und ganz besonders bevorzugt größer als 20:1.

In der Aufsicht auf die größte Fläche des plättchenförmigen Pigmentes kann dieses sowohl eine reguläre als auch eine irreguläre Form aufweisen.

Dabei bedeutet regulär im Sinne der Erfindung, dass das plättchenförmige Pigment eine vorbestimmte Form aufweisen kann, die beispielsweise die Form eines regelmäßigen oder unregelmäßigen Vielecks, eines Kreises oder einer Ellipse sein kann.

Bevorzugt ist es jedoch, wenn die Form der größten Fläche des Pigmentes in der Aufsicht unregelmäßig ist. In diesem Falle ist die äußere Form nicht definiert und kann sowohl spitze und eckige als auch runde bzw. abgerundete Kanten bzw. beides in Kombination miteinander aufweisen. Damit ist die äußere Form des Sicherheitspigmentes von der äußeren Form von anderen, regelmäßig zur Pigmentierung von Lacken, Druckfarben, Polymermassen und dergleichen angewendeten Effektpigmenten nicht zu unterscheiden. Letztere weisen in der Regel ebenfalls ungleichmäßige Formen auf.

Im Sicherheitspigment, welches gemäß der vorliegenden Erfindung verwendet wird, weist die Matrix eine Brechzahl n₁ und das partikuläre Material eine Brechzahl n₂ auf, wobei n₁ verschieden ist von n₂ und die Differenz Δn zwischen n₁ und n₂ mindestens 0,2 beträgt.

Ist die Matrix niedrig brechend, weist sie eine Brechzahl n₁ <1,8 auf und besteht aus Siliziumdioxid, Siliziumoxidhydrat, Aluminiumoxid, Aluminiumoxidhydrat, Magnesiumoxid oder einer Mischung aus zwei oder mehreren dieser Verbindungen.

Um eine hochbrechende Matrix zu erhalten, die eine Brechzahl n₁ ≥1,8 aufweist, werden vorzugsweise Titandioxid und/oder Titandioxidhydrat als Matrixmaterial eingesetzt.

Die Dicke der verfestigten Matrix beträgt von 0,05 µm bis kleiner als 10 µm, vorzugsweise von 0,1 µm bis 5 µm und besonders bevorzugt von 0,2 - 2 µm.

In einer besonders bevorzugten Ausführungsform der vorliegenden Erfindung besteht die Matrix aus Siliziumoxid und/oder Siliziumdioxidhydrat.

Das in die Matrix eingelagerte partikuläre Material ist ein sphärisches oder dreidimensional regelmäßig oder unregelmäßig geformtes Material und weist eine Teilchengröße von 0,01 bis 12 µm auf.

Dabei ist bemerkenswert, dass die Teilchengröße des partikulären Materials nicht zwingend geringer sein muss als die Dicke der verfestigten Matrix, in die das partikuläre Material eingelagert ist. Im Gegensatz zu Interferenzpigmenten, bei denen es auf die Ausbildung besonders glatter Oberflächen zur Erzielung des gewünschten Interferenzeffektes in hohem Maße ankommt, kann bei den erfindungsgemäß eingesetzten Sicherheitspigmenten durchaus eine gewisse Rauheit der Pigmentoberfläche auftreten, die durch über die Matrixoberfläche herausragende eingelagerte Partikel verursacht wird. Das Auftreten von Interferenzeffekten an der Oberfläche der erfindungsgemäß eingesetzten Sicherheitspigmente ist dagegen auch bei einem mehrlagigen Aufbau der Pigmente eher nicht erwünscht und daher auch nicht bevorzugt.

Als partikuläres Material wird mindestens ein anorganisches Weiß-, Schwarz- oder Buntpigment, ein anorganisches UV-Pigment, ein anorganisches IR-Upconverter-Pigment, ein verkapselter organischer Farbstoff, ein verkapseltes UV- oder IR-Upconverter Material oder Gemische aus zwei oder mehreren von diesen eingesetzt.

Als Weiß-, Schwarz- oder Buntpigmente können dabei im Prinzip alle farbgebenden Pigmente eingesetzt werden, die sich fein bis zur gewünschten Partikelgröße vermahlen lassen und beim Einbringen in die Matrix ihre Form und Größe beibehalten. Die Pigmente, die auch im feinteiligen Zustand als Einzelpartikel eine hohe Farbstärke aufweisen, sind dabei bevorzugt. Hierbei handelt es sich beispielsweise um Titandioxid, Bariumsulfat, Zinkoxid, Pigmentruß, Eisenoxide (Hämatit, Magnetit), Chromoxid, Thenards Blau (CoAl₂O₄), Rinmans Grün (ZnCo₂O₄), Cobalt-Chrom-Aluminat-Spinell ((Co, Cr)Al₂O₄) oder Gemische aus zwei oder mehreren von diesen.

Als partikuläres Material zur Einlagerung in die Matrix sind ebenfalls Materialien geeignet, die unter Anregung von UV-Strahlung sichtbares Licht emittieren. Dabei kann es sich beispielsweise um ein dotiertes Metalloxid, ein dotiertes Metallsulfid, ein Metalloxysulfid der Lanthaniden oder ein zur Fluoreszenz befähigtes Mischoxid oder um ein Gemisch aus zwei oder mehreren von diesen handeln.

Solche Materialien sind bekannt und werden allgemein als UV-fluoreszierende Pigmente bezeichnet. Typische Vertreter sind beispielsweise ZnS: Cu, Gd-Oxysulfid, Y-Oxysulfid oder Mischoxide, wie z. B. Ba-Mg-Aluminate, um nur einige zu nennen.

Der Einsatz solcher Materialien in Sicherheitsprodukten allgemein ist weit verbreitet. Deshalb stehen dem Fachmann eine große Anzahl verwendbarer Stoffe zur Verfügung. Diese sind, unbeschränkt durch ihre stoffliche Zusammensetzung, verwendbar, solange sie in die geforderte Partikelgröße gebracht werden können.

Partikuläre Materialien, die unter Anregung von IR-Strahlung sichtbares Licht emittieren, also die so genannten IR-Upconverter, sind ebenfalls für den Einsatz im erfindungsgemäßen Sicherheitspigment geeignet. Dabei handelt es sich beispielsweise um ein mit mindestens einem Übergangsmetallion, Lanthanidion und/oder Actinidion dotiertes Oxid, Halogenid, Chalcogenid, Oxyhalogenid, Oxysulfid, Fluoroarsenat oder Fluoroindat der Elemente Li, Na, K, Mg, Ge, Ga, Al, Pb, Cd, Ba, Mn, Nb, Ta, Cs, Y, Nd, Gd, Lu, Rb, Sc, Bi, Zr und W oder um ein Gemisch aus zwei oder mehreren von diesen.

Als Dotierionen sind dabei die Übergangsmetallionen, Lanthanidioenen und/oder Actividionen Ti²⁺, Cr³⁺, Ni²⁺, Mo³⁺, Re⁴⁺, Os⁴⁺, Pr³⁺, Nd³⁺, Gd³⁺, Dy³⁺, Ho³⁺, Er³⁺, Tm²⁺, U⁴⁺ und/oder U³⁺ besonders geeignet.

Als IR-Upconverter werden sehr häufig Gemische aus Oxyhalogeniden oder Oxysulfiden oder mehrfach dotierte Verbindungen eingesetzt.

Dabei handelt es sich beispielsweise um Gemische, die Yttriumoxysulfid und ein oder mehrere Verbindungen ausgewählt aus Gadoliniumoxysulfid, Ytterbiumoxysulfid, Erbiumsulfid und Thuliumoxysulfid enthalten. Auch Gemische aus Gadoliniumoxychlorid/fluorid mit Ytterbiumoxychlorid/fluorid und/oder Erbiumoxychlorid/fluorid oder Verbindungen wie Y₂O₃:Yb,Er, Nd:YAG und Li,NaYF₄:Er werden kommerziell als IR-Upconverter vertreiben. Sie sind im Markt gut verfügbar und daher für den Einsatz im erfindungsmäßigen Sicherheitspigment bevorzugt. Prinzipiell lassen sich alle kommerziell erhältlichen IR-Upconverter-Materialien einsetzen, solange sie beim Einbringen in die Matrix und im anschließenden Verfestigungsprozess Form und Größe beibehalten und mechanisch und chemisch stabil sind.

Die genannten UV-Materialien und IR-Upconverter-Materialien können auch in verkapselter Form vorliegen. Die Kapsel (Schutzhülle) kann dabei aus einem anorganischen Material oder aus organischen Polymeren bestehen und wird in der Regel dazu verwendet, das im Kern liegende Material zu schützen, oder um einen flüssigen lumineszierenden Stoff in eine handhabbare feste Form zu überführen. Auch solche verkapselten unter UV- oder IR-Anregung im sichtbaren Wellenlängenbereich lumineszierenden Materialien sind im Handel in den genannten Partikelgrößen verfügbar. Bekannte, eigentlich gelöste UV-fluoreszierende Farbstoffe sind beispielsweise Cumarine, Rhodamine, Phthaleine wie Fluorescin, Uranin, oder Stilben-bzw. Pyrazolderivate wie Blankophor u.a.

Ebenfalls in gekapselter Form können gelöste und lösliche organische Farbstoffe eingesetzt werden. Dabei verhindert die Kapsel ein vollständiges Einfärben des Matrixmaterials, wenn der organische Farbstoff in die Matrix eingebracht wird. Als organische Farbstoffe sind alle bekannten Farbstoffe geeignet, die sich in geeigneter Weise verkapseln lassen. Als Beispiel sollen hier ein in Lauge löslicher Hydroxyanthrachinonfarbstoff oder ein saurer Azofarbstoff genannt werden.

Die vorgenannten partikulären Materialien liegen im erfindungsgemäß verwendeten Sicherheitspigment entweder einzeln oder im Gemisch vor. Dabei können die Gemische aus mehreren der gleichen Art, beispielsweise mehreren Schwarz-, Weiß- oder Buntpigmenten, aus mehreren UV-Pigmenten oder IR-Upconverter-Pigmenten, die untereinander oder miteinander gemischt werden, oder aus Schwarz-, Weiß- oder Buntpigmente bestehen, die mit einem oder mehreren verschiedenen lumineszierenden partikulären Materialien gemischt werden.

Besonders bevorzugt ist eine Ausführungsform der vorliegenden Erfindung, bei der das partikuläre Material ein Gemisch aus mindestens einem selektiv oder nicht selektiv absorbierenden und mindestens einem emittierenden Material ist.

Besonders bevorzugte Ausführungsformen der vorliegenden Erfindung weisen in einer Matrix aus Siliziumdioxid eingelagerte partikuläre Teilchen aus Titandioxid, Titandioxid und Eisenoxid (Hämatit), UV-Pigment (z. B. ZnS : Cu), UV-Pigment und Titandioxid und/oder Eisenoxid, IR-Upconverter (z. B. Gemisch aus Yttriumoxysulfid mit Gadoliniumoxysulfid, Ytterbiumoxysulfid und Erbiumoxysulfid), IR-Upconverter und UV-Pigment, IR-Upconverter und Titandioxid und/oder Eisenoxid, auf.

Dabei erscheint bei Betrachtung des erfindungsgemäß eingesetzten Pigmentes unter dem Lichtmikroskop das partikuläre Material weiß (TiO₂), rotbraun-orange (Fe₂O₃), und strahlend weiß oder farbig bei Anregung durch UV- und/oder IR-Strahlung.

Das partikuläre Material liegt in der Matrix mit einem Anteil von 10 bis 50 Gew %, bezogen auf das Gesamtgewicht des Sicherheitspigmentes, vor.

Wie bereits vorab erwähnt, sind die im erfindungsgemäß verwendeten Sicherheitspigment eingelagerten partikulären Materialien unter dem Lichtmikroskop, ggf. nach Anregung mit UV- und/oder IR-Strahlung, oder unter dem UV-Mikroskop, als Einzelpartikel bei entsprechender Vergrößerung wahrnehmbar. Dabei lässt sich die (genaue oder ungefähre) Anzahl der Partikel ebenso wie deren Farbe, Größe oder Anteil in der Matrix optisch in einfacher Weise feststellen. Daher kann die Veränderung dieser Parameter gezielt dazu verwendet werden, das Sicherheitspigment nach Hersteller, Charge, Produktionszeitraum, Vertriebsweg etc. zu codieren. Der uneingeweihte Betrachter, selbst wenn er in der Lage ist, das Sicherheitspigment im Anwendungsmedium zu orten und die eingelagerten partikulären Materialien, beispielsweise durch ihre Farbe, zu erkennen, aber über eine Codierung nicht informiert ist, kann den dem Sicherheitspigment intrinsisch innewohnenden Code auch nicht entschlüsseln.

Daher stellt die Teilchengröße des partikulären Materials in Verbindung mit dem unter sichtbarem Licht beobachtbaren Anteil der Partikel und/oder der unter Einstrahlung von sichtbarem, UV-, und/oder IR-Licht beobachtbaren Farbe des partikulären Materials einen forensischen Code dar, der sich nur wenigen informierten und instruierten Betrachtern des Sicherheitspigmentes erschließt.

In einer weiteren Ausführungsform der vorliegenden Erfindung weist das Sicherheitspigment zusätzlich eine ein- oder mehrschichtige Beschichtung auf, die es vollständig umhüllt

Vorzugsweise besteht die zusätzliche Beschichtung aus mindestens einem anorganischen dielektrischen Material.

Als anorganische dielektrische Materialien sind im Prinzip alle bekannten anorganischen dielektrischen Materialien wie Metalloxide, Metalloxidhydrate oder deren Gemische, Metallmischoxide, -suboxide, -oxinitride oder Metallfluoride geeignet.

Insbesondere können farbige oder farblose Metalloxide, ausgewählt aus TiO₂, Fe₂O₃, Fe₃O₄, SnO₂, Sb₂O₃, SiO₂, Al₂O₃, ZrO₂, B₂O₃, Cr₂O₃, ZnO, CuO, NiO oder deren Gemische, oder Magnesiumfluorid eingesetzt werden.

Besonders geeignet sind farblose Metalloxide wie TiO₂, SnO₂, SiO₂, Al₂O₃, ZrO₂ B₂O₃ und ZnO, sowie deren Oxidhydrate.

Dabei kann das Material für die Beschichtung dem Material der Matrix entsprechen oder davon verschieden sein.

Es sind auch Beschichtungen möglich, die aus mehreren Schichten bestehen. Die der Matrix zugewandte Schicht einer solchen mehrlagigen Beschichtung kann dabei ebenfalls dem Material der Matrix entsprechen oder davon verschieden sein.

Die zusätzliche Beschichtung dient dabei der Modifizierung der Oberfläche des Sicherheitspigmentes. Dies kann sowohl eine im allgemeinen als Nachbeschichtung bekannte Schichtfolge sein, die sich aus ein oder mehreren anorganischen und/oder organischen Schichten mit Schichtdicken im einstelligen Nanometerbereich zusammensetzt und zur Verbesserung der Oberflächeneigenschaften der erfindungsgemäß verwendeten Sicherheitspigmente bezüglich deren Einarbeitung in Anwendungsmedien, wie beispielsweise Druckfarben, dient. Eine solche Nachbeschichtung wird üblicherweise bei verschiedenen Pigmenten, beispielsweise Interferenzpigmenten, aufgebracht und beeinträchtigt deren optisches Verhalten nicht. Sie ist dem Fachmann geläufig.

Eine Modifizierung der Oberfläche des erfindungsgemäß verwendeten Sicherheitspigmentes kann aber auch in der Art erfolgen, dass die Brechzahl der Matrix gegenüber dem Anwendungsmedium durch die zusätzliche Beschichtung verändert werden soll.

In diesem Falle besteht die zusätzliche Beschichtung aus mindestens einem anorganischen dielektrischen Material und weist in einer Ausführungsform der Erfindung zumindest an ihrer von der Matrix abgewandten Oberfläche eine Brechzahl n₃ auf, die von der Brechzahl n₁ der Matrix verschieden ist.

In einer weiteren Ausführungsform der Erfindung besteht die Beschichtung aus mindestens einem anorganischen dielektrischen Material und weist zumindest an ihrer von der Matrix abgewandten Oberfläche eine Brechzahl n₃ auf, die von der Brechzahl n₂ des partikulären Materials verschieden ist.

In einer zusätzlichen Ausführungsform der Erfindung besteht die Beschichtung aus mindestens einem anorganischen dielektrischen Material und weist zumindest an ihrer von der Matrix abgewandten Oberfläche eine Brechzahl n₃ aufweist, die weitestgehend gleich der Brechzahl n₂ des partikulären Materials ist.

Darüber hinaus besteht in einer weiteren Ausführungsform der Erfindung die Beschichtung aus mindestens einem anorganischen dielektrischen Material und weist zumindest an ihrer von der Matrix abgewandten Oberfläche eine Brechzahl n₃ auf, die von der Brechzahl n₄ eines das Sicherheitspigment umgebenden Mediums verschieden ist.

Die vorgenannten Ausführungsformen sollen nachfolgend an einfachen Beispielen erläutert werden.

Zunächst soll jedoch das optische Verhalten eines erfindungsgemäß einsetzten Sicherheitspigmentes erläutert werden, welches entweder keine zusätzliche Beschichtung oder lediglich eine so genannte Nachbeschichtung aufweist. Bei einem solchen Sicherheitspigment werden die optischen Eigenschaften im Anwendungsmedium von Material der Matrix und dem Material des eingelagerten partikulären Materials bestimmt.

Die für Pigmente üblichen Anwendungsmedien wie Beschichtungszusammensetzungen, Farben, Lacke, Druckfarben oder Kunststoffmassen weisen im allgemeinen relativ niedrige Brechzahlen im Bereich von etwa 1,5 bis etwa 1,65 auf. Ob Pigmente, die in ein solches Anwendungsmedium eingebracht werden, darin sichtbar sind, hängt neben den Farben des Anwendungsmediums und des Pigmentes vom Brechzahlunterschied beider Materialien ab. Sind Anwendungsmedium und Pigment beide farblos und transparent, hängt die Sichtbarkeit des Pigmentes nur vom Brechzahlunterschied beider Materialien ab.

Ein Pigment mit einer Matrix aus SiO₂, die im allgemeinen eine Brechzahl von ca. 1,45 bis 1,5 aufweist, ist also als solches mit seiner äußeren Form in einem Anwendungsmedium, welches eine Brechzahl von 1,5 bis 1,65 aufweist, nicht sichtbar.

Enthält ein solches Pigment dagegen ein feinteiliges partikuläres Material wie in der vorliegenden Erfindung, sind diese Partikel bei entsprechend hoher Vergrößerung im Lichtmikroskop erkennbar, wenn sie einen Brechzahlunterschied zur Matrix aufweisen. Im Durchlicht lassen sich solche Partikel auch durch die erzeugten Streueffekte sichtbar machen. Diese Sichtbarkeit ist unabhängig von der eventuellen Farbgebung des partikulären Materials bzw. dessen UV/IR-Aktivität.

Ist die Konzentration des partikulären Materials hoch genug und dessen Partikelgröße ausreichend gering, kann aus der Form der Anhäufung des partikulären Materials im Anwendungsmedium auch auf die Form des Sicherheitspigmentes geschlossen werden, obwohl dessen äußere Konturen nicht direkt sichtbar sind.

Besteht die Matrix dagegen aus einem hochbrechenden Material wie TiO₂ oder Titanoxidhydrat, die eine Brechzahl von etwa 2,4 aufweisen, wird das eingesetzte Sicherheitspigment in seiner Kontur im Anwendungsmedium sichtbar sein, da hier der Brechzahlunterschied ausreicht.

Wird ein Sicherheitspigment, welches eine Matrix aus SiO₂ (n₁ = 1,45) aufweist, nun mit einer Beschichtung aus TiO₂ (n₃ = 2,4) versehen, können die Konturen eines solchen Pigmentes in einem Anwendungsmedium, welches die Brechzahl n₄ = 1,5 aufweist, im Lichtmikroskop erkannt werden.

Die eingelagerten Partikel, die entweder farbig und/oder IR/UV-aktiv sind, können dann bei anschließender Erhöhung der Vergrößerung des Lichtmikroskops und/oder bei Einsatz einer IR/UV-Lichtquelle sichtbar gemacht werden.

Sofern ein Unterschied in der Brechzahl des partikulären Materials n₂ und der Brechzahl n₃ der Beschichtung besteht, kann selbst ein ansonsten farbloses IR/UV-Material im Lichtmikroskop bei entsprechend hoher Vergrößerung sichtbar sein.

Ist dagegen die Brechzahl n₂ eines partikulären IR/UV-Materials weitestgehend gleich der Brechzahl der zusätzlichen Beschichtung, ist im Anwendungsmedium im Lichtmikroskop jeweils nur die äußere Form des erfindungsgemäßen Sicherheitspigmentes erkennbar. Die IR/UV-aktiven eingelagerten Partikel werden dagegen erst bei entsprechender Anregung sichtbar und liegen dann, je nach Konzentration im Sicherheitspigment, in einer Anhäufung auf geringstem Raum vor, die in üblichen Sicherheitsprodukten, die beispielsweise solche partikulären Materialien im Anwendungsmedium in statistischer Verteilung enthalten, nicht erreichbar sind. Hier liegt ein großer Vorteil der vorliegenden Erfindung, die mit einer geringen Menge an lumineszierenden Stoffen im Endprodukt einen deutlichen Nachweis von beispielsweise IR- und UV-aktiven lumineszierenden Materialien erbringen kann und trotzdem noch eine Codierung erlaubt.

Es versteht sich von selbst, dass das Material für die zusätzliche Beschichtung je nach den Gegebenheiten an das Material der Matrix und des partikulären Materials hinsichtlich der Brechzahl so angepasst wird, dass die gewünschten Effekte entstehen.

Als hochbrechendes Material für eine Matrix aus SiO₂ kommen beispielsweise SnO₂, TiO₂ oder Al₂O₃ in Betracht, gegebenenfalls auch im Gemisch oder in aufeinander folgenden Schichten. Im Gegenzug kann eine Matrix aus TiO₂ beispielsweise durch eine Beschichtung aus SiO₂, SnO₂ oder Al₂O₃ in ihrer Brechzahl dahingehend verändert werden, dass die Brechzahl der Beschichtung geringer ist als die Brechzahl der Matrix.

Die erfindungsgemäß verwendeten Sicherheitspigmente werden hergestellt, indem eine Mischung aus einem oder mehreren der vorab beschriebenen partikulären Materialien mit einem flüssigen oder fließfähigen Precursor, der zur Bildung der Matrix erforderlich ist, auf einen flächigen Träger so aufgebracht wird, dass sich ein gleichmäßiger Film ausbildet, dieser Film durch Trocknung verfestigt, vom Träger gelöst und zerkleinert wird, so dass Pigmente aus einer festen Matrix mit eingelagertem partikulären Material entstehen.

Bei Bedarf können diese Pigmente weiteren Trocknungs- und Zerkleinerungsschritten und/oder Glühschritten unterzogen werden.

Solche Verfahren sind an sich bekannt und werden in der Regel in einer Bandanlage durchgeführt. Dabei kann es zur Ausbildung einer festen Matrix notwendig sein, den verfestigten Precursorfilm mit Wasser, Säure und/oder Lauge zu behandeln, um eine stabile Matrix zu erhalten. In welcher Reihenfolge die partikulären Materialien dem Precursor zugegeben werden, spielt in der Regel keine Rolle. Ebenso kann die Mischung von Precursor und partikulären Materialien erst unmittelbar auf dem flächigen Träger erfolgen.

Als Ausgangsmaterialien (Precursor) zur Herstellung des erfindungsgemäßen Sicherheitspigmentes eignen sich insbesondere Natron- und Kaliwasserglas, hydrolysierbare Titanverbindungen wie Titantetrachlorid, sowie hydrolysierbare Aluminium- und Magnesiumverbindungen. Entsprechende Verfahren sind in EP 608 388 sowie in DE 19 618 564 beschrieben.

Werden die erfindungsgemäß verwendeten Sicherheitspigmente mit einer weiteren Beschichtung versehen, so kann diese Beschichtung in Anlehnung an die Verfahren zur Beschichtung von Interferenzpigmenten, die hinreichend bekannt sind, erfolgen. Vorzugsweise werden hier nasschemische Beschichtungsverfahren mit organischen oder anorganischen hydrolysierbaren Metallverbindungen als Ausgangsprodukten bevorzugt, weil sie zu einer gleichmäßigen Beschichtung der Pigmente bei vertretbarem Kostenaufwand führen. Besonders bevorzugt sind Verfahren, in denen ausschließlich anorganische Ausgangsmaterialien eingesetzt werden.

Im Unterschied zu der Belegung von Interferenzpigmenten mit dielektrischen Schichten kommt es bei den erfindungsgemäß verwendeten Sicherheitspigmenten nicht auf eine perfekt glatte Oberfläche der Pigmente, auf gleichmäßige Schichtdicke der umhüllenden Schichten oder auf die Einhaltung von bestimmten, eng begrenzten Schichtdicken der Beschichtung an. Vielmehr ist er ausreichend, wenn das Sicherheitspigment vollständig von einer Beschichtung umhüllt wird, die an ihrer dem Anwendungsmedium zugewandten Oberfläche vorzugsweise eine Brechzahl aufweist, die von der Brechzahl der Matrix verschieden ist. Nasschemische Beschichtungsverfahren von plättchenförmigen Pigmenten sind beispielsweise aus den Dokumenten DE 14 67 468, DE 19 59 998, DE 20 09 566, DE 22 14 545, DE 22 15 191, DE 22 44 298, DE 23 13 331, DE 25 22 572, DE 31 37 808, DE 31 37 809, DE 31 51 355, DE 32 11 602 und DE 32 35 017 bekannt.

Soll ein Titandioxid mit besonders hoher Brechzahl (Rutil) aufgebracht werden, empfiehlt es sich, vorab eine dünne Zinnoxidschicht aufzubringen.

Nach dem Aufbringen der weiteren Beschichtung ist es vorteilhaft, wenn die erhaltenen Pigmente bei Temperaturen zwischen 100 °C und 1000 °C, vorzugsweise bei Temperaturen zwischen 100 °C und 300 °C für Pigmente, die IR/UV-aktive partikuläre Materialien enthalten, geglüht werden.

Das erfindungsgemäß verwendete Sicherheitspigment wird gemäß der vorliegenden Erfindung zur Pigmentierung von Farben, Lacken, Pulverlacken, Druckfarben, Beschichtungszusammensetzungen, Kunststoffen, Klebstoffen, Papierrohmassen, Baumaterialien, Gummimassen und Explosivstoffen eingesetzt.

Dabei wird das Sicherheitspigment als Taggant eingesetzt.

Wie vorab beschrieben, liegen Taggants in den mit ihnen pigmentierten Materialien in sehr geringen Konzentrationen vor, so dass die gerade noch auffindbar und analysierbar sind.

In der Regel sind die üblichen Anwendungsmedien ohnehin mit verschiedenen Pigmenten zur Farbgebung pigmentiert.

Für die vorliegende Erfindung ist es wichtig, dass das Sicherheitspigment, wenn es im Gemisch mit Farb- und/oder Effektpigmenten eingesetzt wird, den durch diese erzeugten Farbeindruck nicht wesentlich beeinträchtigt, verändert oder bestimmt.

Erfindungsgemäß wird daher das Sicherheitspigment der Farbe, dem Lack, dem Pulverlack, der Druckfarbe, der Beschichtungszusammensetzung, dem Kunststoff, dem Klebstoff, der Papierrohmasse, den Baumaterialien, den Gummimassen oder den Explosivstoffen in einer Menge von 0,0001 bis 20 Gew.%, bezogen auf das Gesamtgewicht des jeweiligen Materials, zugegeben. Dabei ist der Anteil des Sicherheitspigmentes selbstverständlich von der Art des Anwendungsmediums abhängig. Während bei Baumaterialien, wie beispielsweise Beton, Klebstoffen und Gummimassen geringste Mengen ausreichen, werden Beschichtungszusammensetzungen und Druckfarben regelmäßig größere Mengen enthalten.

Die Farbe, der Lack, der Pulverlack, die Druckfarbe, die Beschichtungszusammensetzung, der Kunststoff, der Klebstoff, die Papierrohmasse oder die Gummimasse werden erfindungsgemäß zur Herstellung von Sicherheitsdokumenten oder Sicherheitserzeugnissen wie Banknoten, Schecks, Bank- und Kreditkarten, Scheckkarten, Wertpapieren, Dokumenten wie Ausweisen, Zertifikaten, Prüfbescheinigungen, Wert- und Briefmarken, Identifikationskarten, Bahn- und Flugtickets, Eintrittskarten, Telefonkarten, Etiketten, Prüfmarken sowie Verpackungsmaterialien eingesetzt. Diese Aufzählung ist nur beispielhaft und nicht als abschließend zu bewerten.

Insbesondere beim Einsatz in Sicherheitsdokumenten und Sicherheitsprodukten, die in Form von pigmenthaltigen Beschichtungen, Aufdrucken, Sicherheitsstreifen und dergleichen bereits mit Sicherheitsmerkmalen versehen sind, die an die optische Wirkung von Pigmenten gebunden sind, kann die Zugabe des erfindungsgemäß verwendeten Pigmentes als Taggant die Echtheit der zur Farbgebung verwendeten Pigmente bestätigen. Das erfindungsgemäß verwendete Sicherheitspigment ist in seinen vielfältigen Ausgestaltungsformen deutlich von üblichen Interferenzpigmenten und Metalleffektpigmenten unterscheidbar und kann bereits durch seine Anwesenheit den Echtheitsnachweis für die genannten Produkte erbringen. Gleichzeitig ist es codierbar, so dass mögliche forensische Sicherheitsmerkmale intrinsisch vorhanden sind.

Gegenstand der Erfindung ist auch ein Verfahren zum Detektieren eines Sicherheitspigmentes gemäß Anspruch 22, wobei ein das Sicherheitspigment enthaltendes Medium oder ein ein solches Medium enthaltendes Produkt mit elektromagnetischer Strahlung beaufschlagt und unter einer solchen Vergrößerung betrachtet wird, die ausreichend groß ist, um in einem ersten Schritt die äußere Form und Größe des Sicherheitspigmentes und in einem zweiten Schritt die Form, Größe, Anzahl und/oder Farbe des in die Matrix eingelagerten partikulären Materials erkennen zu können.

Bei der elektromagnetischen Strahlung handelt es sich dabei um sichtbares Licht, Strahlung im UV-Wellenlängenbereich und/oder Strahlung im IR-Wellenlängenbereich.

Wie bereits vorab beschrieben, ist die äußere Form und Größe des Sicherheitspigmentes direkt oder indirekt ermittelbar. Für den Fall, dass die Brechzahl der Matrix und die Brechzahl des Anwendungsmediums deutlich verschieden sind, sind äußere Form und Größe des Sicherheitspigmentes direkt ermittelbar.

Für den Fall, dass die Brechzahl der Matrix und die Brechzahl des Anwendungsmediums annähernd gleich sind, ist die äußere Form und Größe des Sicherheitspigmentes indirekt über die Anzahl, Verteilung und/oder Farbe des in die Matrix eingelagerten partikulären Materials ermittelbar, solange die Brechzahl des partikulären Materials verschieden ist von der Brechzahl der Matrix und der Brechzahl des Anwendungsmediums.

Dabei wird die Form, Größe, Anzahl und/oder Farbe des partikulären Materials bei der Beaufschlagung mit sichtbarem Licht, bei der Beaufschlagung mit Strahlung im UV-Wellenlängenbereich und/oder im IR-Wellenlängenbereich ermittelt, wobei mindestens zwei dieser Bereiche elektromagnetischer Strahlung nacheinander auf das Medium oder Produkt einwirken.

Ist das partikuläre Material beispielsweise ein Weiß-, Schwarz- oder Buntpigment oder ein verkapselter Farbstoff, wird das das Sicherheitspigment aufweisende Produkt zunächst mit einer Vergrößerungseinrichtung wie beispielsweise einem handelsüblichen Mikroskop bei natürlicher oder künstlicher Beleuchtung (Lichtmikroskop) in einer Vergrößerung betrachtet, die ausreicht, um Partikel in der Größenordnung des Sicherheitspigmentes ausfindig machen zu können. Abhängig vom Brechzahlunterschied der Matrix oder gegebenenfalls der Beschichtung des Sicherheitspigmentes zum Anwendungsmedium wird dabei die äußere Form des Sicherheitspigmentes erkennbar sein oder nicht.

Für den Fall, dass sie erkennbar ist, wird sie sich, eine unregelmäßige Pigmentform vorausgesetzt, nicht von der Form der umliegenden Pigmente, die zur Farbgebung eingesetzt werden, unterscheiden. In einer zweiten Phase, bei erneuter Betrachtung untersichtbarem Licht, aber mit einer höheren Vergrößerung, werden die Einzelpartikel des partikulären Materials sichtbar. Diese liegen in einer auffälligen Anhäufung vor und können untereinander Farb- und Größenunterschiede aufweisen, die zudem einem Code entsprechen können, der sich lediglich dem informierten Betrachter erschließt.

Die Partikelanhäufungen lassen sich von den umliegenden Pigmenten sehr leicht unterscheiden. Müssen sie laut Sicherheitshinweisen im pigmentierten Produkt vorhanden sein, sind sie bei Einstellung der (nur dem informierten) Betrachter bekannten Bedingungen leicht identifizierbar und der Echtheitsnachweis des Produktes (oder der Druckfarbe) ist erbracht. Entspricht das partikuläre Material in der Art seiner Zusammensetzung einem Code, sind wiederum weitere Hinweise zur Identifizierung an den Betrachter nötig. Diese stellen eine besondere Sicherheitsmaßnahme dar (forensischer Code).

Ist das partikuläre Material ein IR/UV-aktives Material, so läuft die erste Stufe des Detektierverfahrens ebenso ab wie vorab beschrieben.

Bei höherer Vergrößerung werden unter Umständen auch im Lichtmikroskop die eingelagerten IR/UV-aktiven Materialien sichtbar, wie vorab ebenfalls schon beschrieben.

Wird bei höherer Vergrößerung eine Anregung des Pigmentes im IR- oder UV-Bereich ausgelöst, können die jeweiligen, sichtbare Strahlung lumineszierenden Einzelpartikel in der Matrix sichtbar gemacht werden. Für den Fall, dass eine solche Anregung bereits bei geringerer Vergrößerung erfolgt wäre, hätte lediglich die unter IR- bzw. UV-Anregung erzeugte Strahlung als solche in einer gewissen Stärke, d.h. als lumineszierendes Pigment, wahrgenommen werden können, nicht jedoch die Einzelpartikel. Es versteht sich von selbst, dass auch die lumineszierenden Materialien in Größe, Anzahl und Farbe variiert werden können, wodurch ein forensischer Code erzeugt werden kann.

Es versteht sich ebenso von selbst, dass in der Matrix sowohl farbige Partikel als auch UV-aktive lumineszierende Partikel und/oder IR-aktive lumineszierende Partikel miteinander kombiniert werden können, sowohl untereinander als auch miteinander.

Werden sie untereinander kombiniert, so enthält die Matrix zwei oder mehr voneinander verschiedene partikuläre Materialien, deren Farbe jeweils nur unter der Beaufschlagung mit sichtbarem Licht oder mit Strahlung im UV-Wellenlängenbereich oder mit Strahlung im IR-Wellenlängenbereich sichtbar ist.

Werden sie dagegen miteinander kombiniert, erfolgt nacheinander eine Beaufschlagung mit Strahlung in unterschiedlichen Wellenlängenbereichen, wie oben bereits dargestellt.

Neben den jeweiligen Einzelmaßnahmen, die bereits beschrieben wurden, kann auch die Gesamtheit der Farben der verschiedenen partikulären Materialien, die bei der Beaufschlagung mit sichtbarem Licht oder mit Strahlung im UV-Wellenlängenbereich oder mit Strahlung im IR-Wellenlängenbereich sichtbar ist, einen forensischen Code ergeben.

Zusätzlich kann zur Bildung eines forensischen Codes auch die unter dem Einfluss der jeweiligen elektromagnetischen Strahlung sichtbare Form, Größe, Anzahl und/oder Verteilung der Partikel des partikulären Materials in der Matrix herangezogen werden.

Obwohl vorab bereits beschrieben, sei noch einmal darauf hingewiesen, dass es sich bei dem das Sicherheitspigment enthaltende Medium um eine Farbe, einen Lack, einen Pulverlack, eine Druckfarbe, eine Beschichtungszusammensetzung, einen Kunststoff, einen Klebstoff, eine Papierrohmasse, ein Baumaterial, eine Gummimasse oder einen Explosivstoff handelt.

Als Produkte, die das Sicherheitspigment-haltige Medium enthalten, kommen nahezu alle bekannten Arten von Sicherheitsdokumenten und Sicherheitserzeugnissen in Frage, von denen vorab eine Auswahl bereits näher beschrieben wurde.

Die erfindungsgemäß verwendeten Sicherheitspigmente sind zur Identifizierung und Echtheitsprüfung von Produkten verschiedenster Art vorteilhaft einsetzbar. Dabei können sie sowohl in einem Medium eingesetzt werden, welches zusätzlich noch weitere Pigmente, die der Farbgebung dienen, enthält, als auch als Einzelpigmente ansonsten unpigmentierten Medien zugegeben werden. Beispielhaft seien hier für die erstgenannte Möglichkeit Farben, Lacke und Druckfarben, für die zweite Möglichkeit farblose Beschichtungszusammensetzungen, Klebstoffe, Baustoffe, Papierrohmassen und dergleichen genannt.

Die erfindungsgemäß verwendeten Sicherheitspigmente enthalten intrinsische verdeckte Sicherheitsmerkmale, die auf die Farb- und/oder Lumineszenzeigenschaften des in die Matrix eingelagerten partikulären Materials zurückzuführen sind. Diese lassen sich unter verschiedenen Bedingungen, das heißt in mehreren Stufen, unterschiedlich identifizieren. Je nach Informationsgrad des Betrachters gehören die erfindungsgemäß verwendeten Sicherheitspigmente also verschiedenen Sicherheitsstufen (Identifizierungslevels) an. Zusätzlich können die in die Matrix eingelagerten partikulären Materialien durch gezielte Kombination bestimmter Mischungen an partikulären Materialien noch einen forensischen Code enthalten, der sich dem uninformierten Betrachter auch dann nicht erschließt, wenn er die einzelnen Partikel optisch identifizieren kann. Hierzu bedarf es besonderer Instruktionen an den Betrachter. Da sich viele verschiedene Kombinationsmöglichkeiten an partikulären Materialien ergeben, ohne dass der Herstellungsprozess der Sicherheitspigmente hierfür maßgeblich geändert werden müsste, können die erfindungsgemäß verwendeten Sicherheitspigmente kostengünstig und, je nach Wunsch des Anwenders, in hoher Vielfalt hergestellt werden. Insbesondere beim Einsatz lumineszierender Partikel ist außerdem hervorzuheben, dass mit einer geringen Gesamtkonzentration an lumineszierenden Stoffen in einem Anwendungsmedium eine hohe Identifizierungsquote zwischen echten und unechten Anwendungsmedien/Sicherheitsprodukten erzielt werden kann, da in den erfindungsgemäß verwendeten Sicherheitspigmenten eine hohe punktuelle Konzentration an lumineszierenden Partikeln vorliegt, die sich gut identifizieren lässt.
Die Sicherheitspigmente werden daher als Taggants eingesetzt, obwohl sie wegen ihrer intrinsischen Farb- und/oder Lumineszenzeigenschaften prinzipiell auch zur alleinigen Pigmentierung von Anwendungsmedien der vorab beschriebenen Art geeignet wären.
Die erfindungsgemäß verwendeten Sicherheitspigmente stellen demnach ein wertvolles Mittel für den Produktschutz dar, mit dem kostengünstig ein sehr hoher Sicherheitslevel der jeweiligen Produkte erzielt werden kann.

Die Erfindung soll nachfolgend anhand von Beispielen erläutert werden, welche die Erfindung näher beschreiben, aber nicht einschränken sollen.

### Beispiel 1:

### SiO₂-Matrix mit eingelagerten UV-lumineszierenden Partikeln

Eine handelsübliche Natriumsilikatlösung wird mit entsalztem Wasser im Verhältnis 1:2,5 verdünnt. Ein Additiv (1 Gew. % Disperse AYT W-22, Fa. Poro Additive GmbH) wird zur obigen Dispersion gegeben. Das Gemisch wird homogenisiert und anschließend mit 30 Gew. %, bezogen auf den Feststoffanteil (SiO₂) der Silikatlösung, ZnS:Cu unter Rühren versetzt. Dabei beträgt die mittlere Teilchengröße der ZnS:Cu-Partikel etwa 2 µm. Die Dispersion wird über den Zeitraum von 1 Stunde intensiv vermischt (Propeller-Rührer, Ultra-Turrax). Anschließend wird die Dispersion nach dem in DE 4134600 beschriebenen Verfahren auf ein kontinuierlich laufendes PET-Band aufgebracht, getrocknet und vom Band gelöst, wobei plättchenförmige Pigmente entstehen. Diese werden in Wasser suspendiert und mit einer Mineralsäure (z. B. HCl) behandelt. Die erhaltenen Pigmente werden einem Mahlprozess unterzogen (Partikelgröße 2 - 60 µm) und für 12 Stunden bei einer Temperatur von 150 °C getrocknet.

### Beispiel 2:

### SiO₂-Matrix mit eingelagerten UV-lumineszierenden Partikeln und hochbrechender Beschichtung (TiO₂)

Ein erfindungsmäßiges Sicherheitspigment wird gemäß Beispiel 1 hergestellt. Dieses wird mit entsalztem Wasser auf eine Feststoffkonzentration von 50 g/l verdünnt und anschließend suspendiert. Die Suspension wird auf 75 °C erhitzt und anschließend wird eine Lösung von 2,25 Gew. % SnCl₄ zugesetzt.
Während der Zugabe wird der pH-Wert mit einer 32 Gew. %igen NaOH-Lösung konstant gehalten. Nach der Ausfällung von SnO₂ werden 100 ml einer TiCl₄-Lösung (400 g TiCl₄/l Wasser) zugegeben. Die Suspension wird für weitere 15 Minuten gerührt. Anschließend werden die erhaltenen Pigmente abgetrennt, mit entsalztem Wasser gewaschen und für 12 Stunden bei 150 °C getrocknet.

### Beispiel 3:

### SiO₂-Matrix mit eingelagerten UV-lumineszierenden Partikel und hochbrechender Beschichtung (Al₂O₃)

Es wird ein Sicherheitspigment gemäß Beispiel 1 hergestellt. Dieses wird mit entsalztem Wasser auf eine Feststoffkonzentration von 50 g/l verdünnt und anschließend wird eine Lösung von 10 Gew. % AlCl₃ zugesetzt. Während der Zugabe wird der pH-Wert mit einer 32 Gew. %igen NaOH-Lösung bei 7,0 konstant gehalten. Die Suspension wird für weitere 15 Minuten nachgerührt. Anschließend werden die erhaltenen Pigmente abgetrennt, mit entsalztem Wasser gewaschen und für 12 Stunden bei 150 °C getrocknet.

### Anwendungsbeispiel A:

### Herstellung einer Druckfarbe für lösemittehaltigen Tiefdruck

15 g eines Farbflop-Effektpigmentes (Farbwechsel Blau-Violett), 0,15 g eines Sicherheitspigments gemäß Beispiel 1 und 75 g eines Nitrocellulose/Alkohol-Verschnittes werden unter Anwendung hoher Scherkräfte miteinander verrührt. Anschließend wird die Suspension auf Druckviskosität eingestellt (DIN 4-Becher nach DIN 53211, 14 - 25 s). Die erhaltene Druckfarbe wird im Tiefdruck mit einem geeigneten Raster (z. B. 60 Linien/cm, elektronisch graviert) auf einer geeigneten Druckmaschine (z. B. Moser-Rototest) verdruckt.
Die Schichtdicke (trocken) der aufgedruckten Schicht beträgt 4 - 8 µm. Die erhaltene Druckfläche zeigt bei Betrachtung im Tageslicht einen Farbwechsel von Blau (steiler Winkel) zu Violett (flacher Winkel). Bei Betrachtung unter dem UV-Mikroskop kann eine große Anhäufung von lumineszierenden Partikeln an wenigen Stellen des Aufdrucks erkannt werden.

Weitere Druckanwendungen für die erfindungsgemäßen Sicherheitspigmente stellen Hochdruck, Flexodruck, direkter Offsetdruck, indirekter Offsetdruck, Tampondruck, Intagliodruck oder Siebdruck dar. Die Konzentration der erfindungsgemäßen Sicherheitspigmente in allen Druckanwendungen beträgt dabei 0,05 - 35 Gew. %, bezogen auf den Pigmentanteil der Druckfarbe.

### Anwendungsbeispiel B:

### Herstellung eines Papiers mit Sicherheitspigmenten

Ein Sicherheitspigment gemäß Beispiel 1 wird in einer Konzentration von 0,5 - 1 Gew. % dem Papierbrei bereits vor dem Schöpfen zugesetzt und durch Rühren homogen verteilt.
Die weitere Papierherstellung wie Schöpfen, Pressen, Trocknen etc. läuft wie üblich ab.

Unter dem Lichtmikroskop sind die Sicherheitspigmente aufgrund des geringen Unterschieds der Brechzahlen nicht zu erkennen. Unter dem UV-Mikroskop (Anregung bei 340 - 380 nm) können die lumineszierenden Pigmente gut identifiziert werden.

### Anwendungsbeispiel C:

### Herstellung eines Baumaterials mit Sicherheitspigmenten

Ein Sicherheitspigment gemäß Beispiel 1 wird in einer Konzentration von 0,5 - 1 Gew. % dem wässrigen Gipsbrei beim Anrühren zugegeben. Anschließend erfolgt die Verarbeitung und Trocknung des Gipses wie üblich.

Unter dem Lichtmikroskop sind die Sicherheitspigmente aufgrund des geringen Unterschieds der Brechzahlen nicht zu erkennen. Unter dem UV-Mikroskop (Anregung bei 340 - 380 nm) können die lumineszierenden Pigmente gut identifiziert werden.

## Patentansprüche

1. Verwendung eines Sicherheitspigmentes mit intrinsischem verdeckten und/oder forensischen Sicherheitsmerkmal, bestehend aus einer transparenten anorganischen Matrix und mindestens einem in die Matrix eingelagerten partikulären Material, welches von der Matrix verschieden ist und unter der Einwirkung von elektromagnetischer Strahlung sichtbares Licht selektiv oder nicht selektiv absorbiert, reflektiert und/oder emittiert, wobei die Matrix eine Dicke von 0,05 bis kleiner als 10 µm aufweist und das partikulare Material ein sphärisches oder dreidimensional regelmäßig oder unregelmäßig geformtes Material ist und eine Teilchengröße von 0,01 bis 12 µm aufweist, als Taggant zur Pigmentierung von Farben, Lacken, Pulverlacken, Druckfarben, Beschichtungszusammensetzungen, Kunststoffen, Klebstoffen, Papierrohmassen, Baumaterialien, Gummimassen und Explosivstoffen, wobei das Sicherheitspigment im Wesentlichen eine Plättchenform aufweist und das partikuläre Material in der Matrix mit einem Anteil von 10 bis 50 Gew.%, bezogen auf das Gesamtgewicht des Sicherheitspigmentes, vorliegt, und wobei die Teilchengröße des partikulären Materials in Verbindung mit dem unter sichtbarem Licht beobachtbaren Anteil der Partikel und/oder der unter Einstrahlung von sichtbarem, UV-, und/oder IR-Licht beobachtbaren Farbe des partikulären Materials einen forensischen Code darstellt.

2. Verwendung nach Anspruch 1, **dadurch gekennzeichnet, dass** das Plättchen in der Aufsicht auf seine größte Fläche eine irreguläre Form aufweist.

3. Verwendung nach einem oder mehreren der Ansprüche 1 bis 2, **dadurch gekennzeichnet, dass** das Sicherheitspigment eine Ausdehnung in Länge und Breite von 1 bis 250 µm sowie eine Dicke von 0,05 bis 12 µm aufweist.

4. Verwendung nach einem oder mehreren der Ansprüche 1 bis 3, **dadurch gekennzeichnet, dass** die Matrix eine Brechzahl n₁ und das partikuläre Material eine Brechzahl n₂ aufweist, wobei n₁ verschieden ist von n₂ und die Differenz Δn zwischen m und n₂ mindestens 0,2 beträgt.

5. Verwendung nach einem oder mehreren der Ansprüche 1 bis 4, **dadurch gekennzeichnet, dass** die Matrix eine Brechzahl n₁<1,8 aufweist und aus Siliziumdioxid, Siliziumoxidhydrat, Aluminiumoxid, Aluminiumoxidhydrat, Magnesiumoxid oder einer Mischung aus zwei oder mehreren dieser Verbindungen besteht.

6. Verwendung nach einem oder mehreren der Ansprüche 1 bis 4, **dadurch gekennzeichnet, dass** die Matrix eine Brechzahl n₁≥1,8 aufweist und aus Titandioxid und/oder Titandioxidhydrat besteht.

7. Verwendung nach einem oder mehreren der Ansprüche 1 bis 6, **dadurch gekennzeichnet, dass** das partikuläre Material mindestens ein anorganisches Weiß-, Schwarz- oder Buntpigment, ein anorganisches UV-Pigment, ein anorganisches IR-Upconverter-Pigment, ein verkapselter organischer Farbstoff, ein verkapseltes UV- oder IR-Upconverter Material oder Gemische aus zwei oder mehreren von diesen ist.

8. Verwendung nach einem oder mehreren der Ansprüche 1 bis 7, **dadurch gekennzeichnet, dass** es sich bei dem partikulären Material um Titandioxid, Bariumsulfat, Zinkoxid, Pigmentruß, Eisenoxide (Hämatit, Magnetit), Chromoxid, Thenards Blau (CoAl₂O₄), Rinmans Grün (ZnCo₂O₄), Cobalt-Chrom-Aluminat-Spinell ((Co, Cr)Al₂O₄) oder Gemische aus zwei oder mehreren von diesen handelt.

9. Verwendung nach einem oder mehreren der Ansprüche 1 bis 8, **dadurch gekennzeichnet, dass** es sich bei dem partikulären Material um ein dotiertes Metalloxid, dotiertes Metallsulfid, Metalloxysulfid der Lanthaniden oder ein zur Fluoreszenz befähigtes Mischoxid oder um ein Gemisch aus zwei oder mehreren von diesen handelt und das partikuläre Material unter Anregung von UV-Strahlung sichtbares Licht emittiert.

10. Verwendung nach einem oder mehreren der Ansprüche 1 bis 9, **dadurch gekennzeichnet, dass** es sich bei dem partikulären Material um ein mit mindestens einem Übergangsmetallion, Lanthanidion und/oder Actinidion dotiertes Oxid, Halogenid, Chalcogenid, Oxyhalogenid, Oxysulfid, Fluoroarsenat oder Fluoroindat der Elemente Li, Na, K, Mg, Ge, Ga, Al, Pb, Cd, Ba, Mn, Nb, Ta, Cs, Y, Nd, Gd, Lu, Rb, Sc, Bi, Zr und W oder um ein Gemisch aus zwei oder mehreren von diesen handelt und das partikuläre Material unter Anregung von IR-Strahlung sichtbares Licht emittiert.

11. Verwendung nach Anspruch 10, **dadurch gekennzeichnet, dass** es sich bei den Übergangsmetallionen, Lanthanidionen und/oder Actinidionen um Ti²⁺, Cr³⁺, Ni²⁺, Mo³⁺, Re⁴⁺, Os⁴⁺, Pr³⁺, Nd³⁺, Gd³⁺, Dy³⁺, Ho³⁺, Er³⁺, Tm²⁺, U⁴⁺ und/oder U³⁺ handelt.

12. Verwendung nach einem oder mehreren der Ansprüche 1 bis 11, **dadurch gekennzeichnet, dass** das partikuläre Material ein Gemisch aus mindestens einem selektiv oder nicht selektiv absorbierenden und mindestens einem emittierenden Material ist.

13. Verwendung nach einem oder mehreren der Ansprüche 1 bis 12, **dadurch gekennzeichnet, dass** das Sicherheitspigment zusätzlich eine ein- oder mehrschichtige Beschichtung aufweist, die es vollständig umhüllt.

14. Verwendung nach Anspruch 13, **dadurch gekennzeichnet, dass** die zusätzliche Beschichtung aus mindestens einem anorganischen dielektrischen Material besteht.

15. Verwendung nach Anspruch 14, **dadurch gekennzeichnet, dass** die zusätzliche Beschichtung aus mindestens einem anorganischen dielektrischen Material besteht und zumindest an ihrer von der Matrix abgewandten Oberfläche eine Brechzahl n₃ aufweist, die von der Brechzahl n₁ der Matrix verschieden ist.

16. Verwendung nach Anspruch 14 oder 15, **dadurch gekennzeichnet, dass** die Beschichtung aus mindestens einem anorganischen dielektrischen Material besteht und zumindest an ihrer von der Matrix abgewandten Oberfläche eine Brechzahl n₃ aufweist, die von der Brechzahl n₂ des partikulären Materials verschieden ist.

17. Verwendung nach Anspruch 14 oder 15, **dadurch gekennzeichnet, dass** die Beschichtung aus mindestens einem anorganischen dielektrischen Material besteht und zumindest an ihrer von der Matrix abgewandten Oberfläche eine Brechzahl n₃ aufweist, die weitestgehend gleich der Brechzahl n₂ des partikulären Materials ist.

18. Verwendung nach einem oder mehreren der Ansprüche 14 bis 17, **dadurch gekennzeichnet, dass** die Beschichtung aus mindestens einem anorganischen dielektrischen Material besteht und zumindest an ihrer von der Matrix abgewandten Oberfläche eine Brechzahl n₃ aufweist, die von der Brechzahl n₄ eines das Sicherheitspigment umgebenden Mediums verschieden ist.

19. Verwendung nach einem oder mehreren der Ansprüche 1 bis 18, **dadurch gekennzeichnet, dass** das Sicherheitspigment im Gemisch mit Farb- und/oder Effektpigmenten eingesetzt wird und den durch diese erzeugten Farbeindruck nicht wesentlich beeinträchtigt, verändert oder bestimmt.

20. Verwendung nach einem oder mehreren der Ansprüche 1 bis 19, **dadurch gekennzeichnet, dass** das Sicherheitspigment der Farbe, dem Lack, dem Pulverlack, der Druckfarbe, der Beschichtungszusammensetzung, dem Kunststoff, dem Klebstoff, der Papierrohmasse, den Baumaterialien, den Gummimassen oder den Explosivstoffen in einer Menge von 0,0001 bis 20 Gew.%, bezogen auf das Gesamtgewicht des jeweiligen Materials, zugegeben wird.

21. Verwendung nach einem oder mehreren der Ansprüche 1 bis 20, **dadurch gekennzeichnet, dass** die Farbe, der Lack, der Pulverlack, die Druckfarbe, die Beschichtungszusammensetzung, der Kunststoff, der Klebstoff, die Papierrohmasse oder die Gummimasse zur Herstellung von Sicherheitsdokumenten oder Sicherheitserzeugnissen wie Banknoten, Schecks, Bank- und Kreditkarten, Scheckkarten, Wertpapieren, Dokumenten wie Ausweisen, Zertifikaten, Prüfbescheinigungen, Wert- und Briefmarken, Identifikationskarten, Bahn- und Flugtickets, Eintrittskarten, Telefonkarten, Etiketten, Prüfmarken sowie Verpackungsmaterialien eingesetzt werden.

22. Verfahren zum Detektieren eines Sicherheitspigmentes, welches als Taggant zur Pigmentierung von Farben, Lacken, Pulverlacken, Druckfarben, Beschichtungszusammensetzungen, Kunststoffen, Klebstoffen, Papierrohmassen, Baumaterialien, Gummimassen und Explosivstoffen nach einem oder mehreren der Ansprüche 1 bis 21 eingesetzt wird, **dadurch gekennzeichnet, dass** ein das Sicherheitspigment enthaltendes Medium oder ein ein solches Medium enthaltendes Produkt mit elektromagnetischer Strahlung beaufschlagt und unter einer solchen Vergrößerung betrachtet wird, die ausreichend groß ist, um in einem ersten Schritt die äußere Form und Größe des Sicherheitspigmentes und in einem zweiten Schritt die Form, Größe, Anzahl und/oder Farbe des in die Matrix eingelagerten partikulären Materials erkennen zu können, wobei es sich bei dem Medium um eine Farbe, einen Lack, einen Pulverlack, eine Druckfarbe, eine Beschichtungszusammensetzung, einen Kunststoff, einen Klebstoff, eine Papierrohmasse, ein Baumaterial, eine Gummimasse oder einen Explosivstoff handelt.

23. Verfahren nach Anspruch 22, **dadurch gekennzeichnet, dass** es sich bei der elektromagnetischen Strahlung um sichtbares Licht, Strahlung im UV-Wellenlängenbereich und/oder Strahlung im IR-Wellenlängenbereich handelt.

24. Verfahren nach Anspruch 22 oder 23, **dadurch gekennzeichnet, dass** die äußere Form und Größe des Sicherheitspigmentes direkt oder indirekt ermittelbar ist.

25. Verfahren nach Anspruch 24, **dadurch gekennzeichnet, dass** die äußere Form und Größe des Sicherheitspigmentes indirekt über die Anzahl, Verteilung und/oder Farbe des in die Matrix eingelagerten partikulären Materials ermittelbar ist.

26. Verfahren nach einem oder mehreren der Ansprüche 22 bis 25, **dadurch gekennzeichnet, dass** die Form, Größe, Anzahl und/oder Farbe des partikulären Materials bei der Beaufschlagung mit sichtbarem Licht, bei der Beaufschlagung mit Strahlung im UV-Wellenlängenbereich und/oder im IR-Wellenlängenbereich ermittelt wird, wobei mindestens zwei dieser Bereiche elektromagnetischer Strahlung nacheinander auf das Medium oder Produkt einwirken.

27. Verfahren nach einem oder mehreren der Ansprüche 25 bis 26, **dadurch gekennzeichnet, dass** die Matrix zwei oder mehr voneinander verschiedene partikuläre Materialien enthält, deren Farbe jeweils nur unter der Beaufschlagung mit sichtbarem Licht oder mit Strahlung im UV-Wellenlängenbereich oder mit Strahlung im IR-Wellenlängenbereich sichtbar ist.

28. Verfahren nach Anspruch 27, **dadurch gekennzeichnet, dass** die Gesamtheit der Farben der verschiedenen partikulären Materialien, die bei der Beaufschlagung mit sichtbarem Licht oder mit Strahlung im UV-Wellenlängenbereich oder mit Strahlung im IR-Wellenlängenbereich sichtbar ist, einen forensischen Code ergibt.

29. Verfahren nach Anspruch 28, **dadurch gekennzeichnet, dass** zusätzlich die unter dem Einfluss der jeweiligen elektromagnetischen Strahlung sichtbare Form, Größe, Anzahl und/oder Verteilung der Partikel des partikulären Materials in der Matrix den forensischen Code ergibt.

30. Verfahren nach einem oder mehreren der Ansprüche 22 bis 29, wobei das das Medium enthaltende Produkt ein Sicherheitsdokument oder Sicherheitserzeugnis ist.

## Claims

1. Use of a security pigment having an intrinsic hidden and/or forensic security feature, consisting of a transparent inorganic matrix and at least one particulate material embedded in the matrix which is different from the matrix and selectively or non-selectively absorbs, reflects and/or emits visible light on exposure to electromagnetic radiation, where the matrix has a thickness of 0.05 to less than 10 µm and the particulate material is a spherical or three-dimensionally regularly or irregularly shaped material and has a particle size of 0.01 to 12 µm, as taggant for the pigmentation of paints, coatings, powder coatings, printing inks, coating compositions, plastics, adhesives, papermaking stocks, building materials, rubber compositions and explosives, where the security pigment essentially has a flake shape and the particulate material is present in the matrix in a proportion of 10 to 50% by weight, based on the total weight of the security pigment, and where the particle size of the particulate material in conjunction with the fraction of the particles that can be observed under visible light and/or the colour of the particulate material that can be observed on exposure to visible, UV and/or IR light represents a forensic code.

2. Use according to Claim 1, **characterised in that** the flake has an irregular shape on its largest surface in plan view.

3. Use according to one or more of Claims 1 to 2, **characterised in that** the security pigment has a length and width dimension of 1 to 250 µm and a thickness of 0.05 to 12 µm.

4. Use according to one or more of Claims 1 to 3, **characterised in that** the matrix has a refractive index n₁ and the particulate material has a refractive index n₂, where n₁ is different from n₂ and the difference Δn between n₁ and n₂ is at least 0.2.

5. Use according to one or more of Claims 1 to 4, **characterised in that** the matrix has a refractive index n₁ < 1.8 and consists of silicon dioxide, silicon oxide hydrate, aluminium oxide, aluminium oxide hydrate, magnesium oxide or a mixture of two or more of these compounds.

6. Use according to one or more of Claims 1 to 4, **characterised in that** the matrix has a refractive index n₁ ≥ 1.8 and consists of titanium dioxide and/or titanium dioxide hydrate.

7. Use according to one or more of Claims 1 to 6, **characterised in that** the particulate material is at least one inorganic white, black or coloured pigment, an inorganic UV pigment, an inorganic IR upconverter pigment, an encapsulated organic dye, an encapsulated UV or IR upconverter material or mixtures of two or more thereof.

8. Use according to one or more of Claims 1 to 7, **characterised in that** the particulate material is titanium dioxide, barium sulfate, zinc oxide, pigment black, iron oxides (haematite, magnetite), chromium oxide, Thénard's Blue (CoAl₂O₄), Rinman's Green (ZnCo₂O₄), cobalt-chromium-aluminate spinel ((Co, Cr)Al₂O₄) or mixtures of two or more thereof.

9. Use according to one or more of Claims 1 to 8, **characterised in that** the particulate material is a doped metal oxide, doped metal sulfide, metal oxysulfide of the lanthanides or a mixed oxide which is capable of fluorescence or a mixture of two or more thereof, and the particulate material emits visible light on excitation by UV radiation.

10. Use according to one or more of Claims 1 to 9, **characterised in that** the particulate material is an oxide, halide, chalcogenide, oxyhalide, oxysulfide, fluoroarsenate or fluoroindate of the elements Li, Na, K, Mg, Ge, Ga, Al, Pb, Cd, Ba, Mn, Nb, Ta, Cs, Y, Nd, Gd, Lu, Rb, Sc, Bi, Zr and W which is doped with at least one transition-metal ion, lanthanide ion and/or actinide ion, or a mixture of two or more thereof, and the particulate material emits visible light on excitation by IR radiation.

11. Use according to Claim 10, **characterised in that** the transition-metal ions, lanthanide ions and/or actinide ions are Ti²⁺, Cr³⁺, Ni²⁺, Mo³⁺, Re⁴⁺, Os⁴⁺, Pr³⁺, Nd³⁺, Gd³⁺, Dy³⁺, Ho³⁺, Er³⁺, Tm²⁺, U⁴⁺ and/or U³⁺.

12. Use according to one or more of Claims 1 to 11, **characterised in that** the particulate material is a mixture of at least one selectively or non-selectively absorbent material and at least one emitting material.

13. Use according to one or more of Claims 1 to 12, **characterised in that** the security pigment additionally has a single- or multilayered coating which surrounds it completely.

14. Use according to Claim 13, **characterised in that** the additional coating consists of at least one inorganic dielectric material.

15. Use according to Claim 14, **characterised in that** the additional coating consists of at least one inorganic dielectric material and has, at least on its surface facing away from the matrix, a refractive index n₃ which is different from the refractive index n₁ of the matrix.

16. Use according to Claim 14 or 15, **characterised in that** the coating consists of at least one inorganic dielectric material and has, at least on its surface facing away from the matrix, a refractive index n₃ which is different from the refractive index n₂ of the particulate material.

17. Use according to Claim 14 or 15, **characterised in that** the coating consists of at least one inorganic dielectric material and has, at least on its surface facing away from the matrix, a refractive index n₃ which is substantially equal to the refractive index n₂ of the particulate material.

18. Use according to one or more of Claims 14 to 17, **characterised in that** the coating consists of at least one inorganic dielectric material and has, at least on its surface facing away from the matrix, a refractive index n₃ which is different from the refractive index n₄ of a medium surrounding the security pigment.

19. Use according to one or more of Claims 1 to 18, **characterised in that** the security pigment is employed in a mixture with coloured and/or effect pigments and does not significantly impair, modify or determine the colour impression generated by the latter.

20. Use according to one or more of Claims 1 to 19, **characterised in that** the security pigment is added to the paint, coating, powder coating, printing ink, coating composition, plastic, adhesive, papermaking stock, building materials, rubber compositions or explosives in an amount of 0.0001 to 20% by weight, based on the total weight of the respective material.

21. Use according to one or more of Claims 1 to 20, **characterised in that** the paint, coating, powder coating, printing ink, coating composition, plastic, adhesive, papermaking stock or rubber composition is employed for the production of security documents or security products, such as banknotes, cheques, bank and credit cards, cheque cards, securities, documents such as identity cards, certificates, examination certificates, revenue and postage stamps, identification cards, train and flight tickets, entry tickets, telephone cards, labels, test stamps and packaging materials.

22. Method for the detection of a security pigment which is employed as taggant for the pigmentation of paints, coatings, powder coatings, printing inks, coating compositions, plastics, adhesives, papermaking stocks, building materials, rubber compositions and explosives according to one or more of Claims 1 to 21, **characterised in that** a medium comprising the security pigment or a product comprising a medium of this type is exposed to electromagnetic radiation and viewed at a magnification which is sufficiently large to enable, in a first step, the outer shape and size of the security pigment to be recognised and, in a second step, to enable the shape, size, number and/or colour of the particulate material embedded in the matrix to be recognised, where the medium is a paint, coating, powder coating, printing ink, coating composition, plastic, adhesive, papermaking stock, building material, rubber composition or explosive.

23. Method according to Claim 22, **characterised in that** the electromagnetic radiation is visible light, radiation in the UV wavelength region and/or radiation in the IR wavelength region.

24. Method according to Claim 22 or 23, **characterised in that** the outer shape and size of the security pigment can be determined directly or indirectly.

25. Method according to Claim 24, **characterised in that** the outer shape and size of the security pigment can be determined indirectly via the number, distribution and/or colour of the particulate material embedded in the matrix.

26. Method according to one or more of Claims 22 to 25, **characterised in that** the shape, size, number and/or colour of the particulate material is determined on exposure to visible light, on exposure to radiation in the UV wavelength region and/or in the IR wavelength region, where at least two of these regions of electromagnetic radiation act successively on the medium or product.

27. Method according to one or more of Claims 25 to 26, **characterised in that** the matrix comprises two or more particulate materials which are different from one another and whose colour is in each case only visible on exposure to visible light or to radiation in the UV wavelength region or to radiation in the IR wavelength region.

28. Method according to Claim 27, **characterised in that** the totality of the colours of the different particulate materials which is visible on exposure to visible light or to radiation in the UV wavelength region or to radiation in the IR wavelength region gives rise to a forensic code.

29. Method according to Claim 28, **characterised in that** the shape, size, number and/or distribution of the particles of the particulate material in the matrix which is visible under the influence of the respective electromagnetic radiation additionally gives rise to the forensic code.

30. Method according to one or more of Claims 22 to 29, where the product comprising the medium is a security document or security product.

## Revendications

1. Utilisation d'un pigment de sécurité ayant une caractéristique de sécurité à but criminalistique et/ou cachée intrinsèque, constitué d'une matrice inorganique transparente et d'au moins un matériau particulaire inclus dans la matrice qui est différent de la matrice et absorbe, réfléchit et/ou émet de manière sélective ou non sélective de la lumière visible lors d'une exposition à un rayonnement électromagnétique, où la matrice possède une épaisseur allant de 0,05 à moins de 10 µm et le matériau particulaire est un matériau sphérique ou de forme tridimensionnelle régulière ou irrégulière et possède une taille de particules allant de 0,01 à 12 µm, comme marqueur pour la pigmentation de peintures, de revêtements, de revêtements pulvérulents, d'encres d'impression, de compositions de revêtements, de matières plastiques, d'adhésifs, de pâtes de fabrication de papier, de matériaux de construction, de compositions de caoutchouc et d'explosifs, où le pigment de sécurité est essentiellement sous forme de paillette et le matériau particulaire est présent dans la matrice selon une proportion allant de 10 à 50% en poids, sur la base du poids total du pigment de sécurité, et où la taille de particules du matériau particulaire conjointement avec la fraction des particules pouvant être observées sous lumière visible et/ou la couleur du matériau particulaire pouvant être observée lors d'une exposition à de la lumière visible, UV et/ou IR représente un code à but criminalistique.

2. Utilisation selon la revendication 1, **caractérisée en ce que** la paillette possède une forme irrégulière sur sa surface la plus importante en vue en plan.

3. Utilisation selon l'une ou plusieurs parmi les revendications 1 à 2, **caractérisée en ce que** le pigment de sécurité possède une dimension de longueur et de largeur allant de 1 à 250 µm et une épaisseur allant de 0,05 à 12 µm.

4. Utilisation selon l'une ou plusieurs parmi les revendications 1 à 3, **caractérisée en ce que** la matrice possède un indice de réfraction n₁ et le matériau particulaire possède un indice de réfraction n₂, où n₁ est différent de n₂ et la différence Δn entre n₁ et n₂ est d'au moins 0,2.

5. Utilisation selon l'une ou plusieurs parmi les revendications 1 à 4, **caractérisée en ce que** la matrice possède un indice de réfraction n₁ < 1,8 et est constituée de dioxyde de silicium, d'oxyde de silicium hydraté, d'oxyde d'aluminium, d'oxyde d'aluminium hydraté, d'oxyde de magnésium ou d'un mélange de deux, ou plus, de ces composés.

6. Utilisation selon l'une ou plusieurs parmi les revendications 1 à 4, **caractérisée en ce que** la matrice possède un indice de réfraction n₁ ≥ 1,8 et est constituée de dioxyde de titane et/ou de dioxyde de titane hydraté.

7. Utilisation selon l'une ou plusieurs parmi les revendications 1 à 6, **caractérisée en ce que** le matériau particulaire est au moins un pigment inorganique blanc, noir ou coloré, un pigment UV inorganique, un pigment convertisseur ascendant IR inorganique, un colorant organique encapsulé, un matériau encapsulé convertisseur ascendant IR ou UV ou des mélanges de deux, ou plus, de ceux-ci.

8. Utilisation selon l'une ou plusieurs parmi les revendications 1 à 7, **caractérisée en ce que** le matériau particulaire est le dioxyde de titane, le sulfate de baryum, l'oxyde de zinc, un pigment noir, les oxydes de fer (hématite, magnétite), l'oxyde de chrome, le Bleu de Thénard (CoAl₂O₄), le Vert de Rinman (ZnCo₂O₄), un spinelle de cobalt-chrome-aluminate ((Co, Cr)Al₂O₄) ou des mélanges de deux, ou plus, de ceux-ci.

9. Utilisation selon l'une ou plusieurs parmi les revendications 1 à 8, **caractérisée en ce que** le matériau particulaire est un oxyde de métal dopé, un sulfure de métal dopé, un oxysulfure d'un métal des lanthanides ou un oxyde mixte qui est capable de fluorescence ou un mélange de deux, ou plus, de ceux-ci, et le matériau particulaire émet de la lumière visible lors d'une excitation par un rayonnement UV.

10. Utilisation selon l'une ou plusieurs parmi les revendications 1 à 9, **caractérisée en ce que** le matériau particulaire est un oxyde, un halogénure, un chalcogénure, un oxyhalogénure, un oxysulfure, un fluoro-arsénate ou un fluoroindate des éléments Li, Na, K, Mg, Ge, Ga, Al, Pb, Cd, Ba, Mn, Nb, Ta, Cs, Y, Nd, Gd, Lu, Rb, Sc, Bi, Zr et W qui est dopé par au moins un ion de métal de transition, un ion lanthanide et/ou un ion actinide, ou un mélange de deux, ou plus, de ceux-ci, et le matériau particulaire émet de la lumière visible lors d'une excitation par un rayonnement IR.

11. Utilisation selon la revendication 10, **caractérisée en ce que** les ions de métal de transitions, les ions lanthanide et/ou les ions actinide sont Ti²⁺, Cr³⁺, Ni²⁺, Mo³⁺, Re⁴⁺, Os⁴⁺, Pr³⁺, Nd³⁺, Gd³⁺, Dy³⁺, Ho³⁺, Er³⁺, Tm²⁺, U⁴⁺ et/ou U³⁺.

12. Utilisation selon l'une ou plusieurs parmi les revendications 1 à 11, **caractérisée en ce que** le matériau particulaire est un mélange d'au moins un matériau sélectivement ou non sélectivement absorbant et d'au moins un matériau émetteur.

13. Utilisation selon l'une ou plusieurs parmi les revendications 1 à 12, **caractérisée en ce que** le pigment de sécurité comporte en outre un revêtement monocouche ou multicouches qui l'enveloppe totalement.

14. Utilisation selon la revendication 13, **caractérisée en ce que** le revêtement supplémentaire est constitué d'au moins un matériau diélectrique inorganique.

15. Utilisation selon la revendication 14, **caractérisée en ce que** le revêtement supplémentaire est constitué d'au moins un matériau diélectrique inorganique et possède, au moins sur sa surface de face opposée à la matrice, un indice de réfraction n₃ qui est différent de l'indice de réfraction n₁ de la matrice.

16. Utilisation selon la revendication 14 ou 15, **caractérisée en ce que** le revêtement est constitué d'au moins un matériau diélectrique inorganique et possède, au moins sur sa surface de face opposée à la matrice, un indice de réfraction n₃ qui est différent de l'indice de réfraction n₂ du matériau particulaire.

17. Utilisation selon la revendication 14 ou 15, **caractérisée en ce que** le revêtement est constitué d'au moins un matériau diélectrique inorganique et possède, au moins sur sa surface de face opposée à la matrice, un indice de réfraction n₃ qui est sensiblement équivalent à l'indice de réfraction n₂ du matériau particulaire.

18. Utilisation selon l'une ou plusieurs parmi les revendications 14 à 17, **caractérisée en ce que** le revêtement est constitué d'au moins un matériau diélectrique inorganique et possède, au moins sur sa surface de face opposée à la matrice, un indice de réfraction n₃ qui est différent de l'indice de réfraction n₄ d'un milieu entourant le pigment de sécurité.

19. Utilisation selon l'une ou plusieurs parmi les revendications 1 à 18, **caractérisée en ce que** le pigment de sécurité est employé dans un mélange avec des pigments colorés et/ou à effet et n'affaiblit pas, ne modifie pas ou ne détermine pas significativement l'impression de couleur générée par ces derniers.

20. Utilisation selon l'une ou plusieurs parmi les revendications 1 à 19, **caractérisée en ce que** le pigment de sécurité est ajouté à la peinture, au revêtement, au revêtement pulvérulent, à l'encre d'impression, à la composition de revêtement, à la matière plastique, à l'adhésif, à la pâte de fabrication de papier, aux matériaux de construction, aux compositions de caoutchouc ou aux explosifs selon une quantité allant de 0,0001 à 20% en poids, sur la base du poids total du matériau respectif.

21. Utilisation selon l'une ou plusieurs parmi les revendications 1 à 20, **caractérisée en ce que** la peinture, le revêtement, le revêtement pulvérulent, l'encre d'impression, la composition de revêtement, la matière plastique, l'adhésif, la pâte de fabrication de papier ou la composition de caoutchouc est employé(e) pour la production de documents de sécurité ou de produits de sécurité, tels que des billets de banque, des chèques, des cartes bancaires et de crédit, des cartes d'identité bancaire, des titres, des documents tels que des cartes d'identité, des certificats, des certificats d'examen, des timbres fiscaux et postaux, des cartes d'identification, des tickets de train et d'avion, des tickets d'entrée, des cartes téléphoniques, des étiquettes, des tampons test et des matériaux d'emballage.

22. Méthode de détection d'un pigment de sécurité qui est employé comme marqueur pour la pigmentation de peintures, de revêtements, de revêtements pulvérulents, d'encres d'impression, de compositions de revêtements, de matières plastiques, d'adhésifs, de pâtes de fabrication de papier, de matériaux de construction, de compositions de caoutchouc et d'explosifs selon l'une ou plusieurs parmi les revendications 1 à 21, **caractérisée en ce qu'**un milieu comprenant le pigment de sécurité ou un produit comprenant un milieu de ce type est exposé à un rayonnement électromagnétique et observé à un grossissement qui est suffisamment important pour permettre, dans une première étape, la reconnaissance de la forme extérieure et de la taille du pigment de sécurité et, dans une deuxième étape, de permettre la reconnaissance de la forme, de la taille, du nombre et/ou de la couleur du matériau particulaire inclus dans la matrice, où le milieu est une peinture, un revêtement, un revêtement pulvérulent, une encre d'impression, une composition de revêtement, une matière plastique, un adhésif, une pâte de fabrication de papier, un matériau de construction, une composition de caoutchouc ou un explosif.

23. Méthode selon la revendication 22, **caractérisée en ce que** le rayonnement électromagnétique est la lumière visible, un rayonnement dans la région de longueur d'onde UV et/ou un rayonnement dans la région de longueur d'onde IR.

24. Méthode selon la revendication 22 ou 23, **caractérisée en ce que** la forme extérieure et la taille du pigment de sécurité peuvent être déterminées directement ou indirectement.

25. Méthode selon la revendication 24, **caractérisée en ce que** la forme externe et la taille du pigment de sécurité peuvent être déterminées indirectement par le nombre, la distribution et/ou la couleur du matériau particulaire inclus dans la matrice.

26. Méthode selon l'une ou plusieurs parmi les revendications 22 à 25, **caractérisée en ce que** la forme, la taille, le nombre et/ou la couleur du matériau particulaire est déterminé(e) par exposition à la lumière visible, par exposition à un rayonnement dans la région de longueur d'onde UV et/ou dans la région de longueur d'onde IR, où au moins deux parmi ces régions de rayonnement électromagnétique agissent successivement sur le milieu ou produit.

27. Méthode selon l'une ou plusieurs parmi les revendications 25 à 26, **caractérisée en ce que** la matrice comprend deux, ou plus, matériaux particulaires qui sont différents l'un de l'autre et dont la couleur est dans chaque cas seulement visible lors d'une exposition à la lumière visible ou à un rayonnement dans la région de longueur d'onde UV ou à un rayonnement dans la région de longueur d'onde IR.

28. Méthode selon la revendication 27, **caractérisée en ce que** la totalité des couleurs des différents matériaux particulaires qui est visible lors d'une exposition à la lumière visible ou à un rayonnement dans la région de longueur d'onde UV ou à un rayonnement dans la région de longueur d'onde IR conduit à un code à but criminalistique.

29. Méthode selon la revendication 28, **caractérisée en ce que** la forme, la taille, le nombre et/ou la distribution des particules du matériau particulaire dans la matrice qui est visible sous l'influence du rayonnement électromagnétique respectif conduit de plus au code à but criminalistique.

30. Méthode selon l'une ou plusieurs parmi les revendications 22 à 29, dans laquelle le produit comprenant le milieu est un document de sécurité ou un produit de sécurité.
